# EUROPEAN PATENT APPLICATION

(11) **EP 4 459 521 A1**
(43) Date of publication of application: **06.11.2024**
(21) Application number: 23219529.7
(22) Date of filing: 21.12.2023
(51) Int. Cl.: G06Q 10/02, G06Q 10/04, G06Q 30/0202

(54) **MULTI-MODEL TIMESERIES FORECASTING OF SET-LEVEL VARIABLES**

(30) Priority: 05.05.2023 US 202363464278 P; 04.12.2023 US 202318527768
(71) Applicant: Expedia, Inc., Seattle, Washington 98119 (US)
(72) Inventor: MCDONALD, Stephen Andrew, Seattle, WA 98119 (US); MEDASANI, Spoorthi, Seattle, WA 98119 (US); MURALIDHAR, Anirudh Kamalapuram, Seattle, WA 98119 (US); REUBEN, Andrew Charles, Seattle, WA 98119 (US)
(74) Representative: Marks & Clerk LLP

(57) **Abstract**

A method includes predicting a first future timeseries for a first variable using a first model, predicting future values for a plurality of second variables using one or more second models, wherein the first variable is a function of the second variables, generating a second future timeseries for the first variable as based on the future values for the plurality of second variables, and providing a composite timeseries forecast for the first variable by combining the first future timeseries and the second future timeseries.

## Description

### CROSS-REFERENCE TO RELATED APPLICATIONS

This application claims priority to and the benefit of U.S. Provisional Patent Application No. 63/464,278 filed May 5, 2023.

### BACKGROUND

The present disclosure relates generally to forecasting (predicting, etc.) future values (e.g., numerical values, binary values, descriptive characteristics) of a variable, in particular in scenarios where the variable is a function of other values associated with members of a set. A set, for example a set of results satisfying search criteria, can include multiple members with each member having its own value(s) for one of more different variables. In at least some scenarios herein, the variable of interest for forecasting is a function of values associated with the different members of the set (e.g., a sum of the member's values, a minimum of the member's values, a maximum of the member's values, an average of the member's values, a median of the member's values, etc.). This scenario creates complexity and challenges with respect to accurately and efficiently forecasting values of the set-level variable of interest, for example using artificial intelligence. In some embodiments, features of the present disclosure may be used in conjunction with forecasting timeseries values of travel characteristics.

### SUMMARY

One implementation of the present disclosure is a method. The method includes predicting a first future timeseries for a first variable using a first model, predicting future values for a plurality of second variables using one or more second models, wherein the first variable is a function of the second variables, generating a second future timeseries for the first variable as based on the future values for the plurality of second variables, and providing a composite timeseries forecast for the first variable by combining the first future timeseries and the second future timeseries.

This summary is illustrative only and is not intended to be in any way limiting.

### BRIEF DESCRIPTION OF THE FIGURES

The disclosure will become more fully understood from the following detailed description, taken in conjunction with the accompanying figures, wherein like reference numerals refer to like elements, in which:
FIG. 1 is a block diagram of a system, according to some embodiments.
FIG. 2 is a flowchart of a flowchart of a process for generating timeseries training data, according to some embodiments.
FIG. 3 is a flowchart for training and using multiple models to provide a composite timeseries forecast for a set-level variable, according to some embodiments.
FIG. 4 is an illustration of a graphical user interface that can be generated based on results of the process of FIG. 3, according to some embodiments.
FIG. 5 is an illustration of a graphical representation that can be generated based on results of the process of FIG. 3, according to some embodiments.
FIG. 6 is a flowchart of a process for tuning an approach for forecast combination, according to some embodiments.
FIG. 7 is a graph of forecast errors using different approaches, according to some embodiments.
FIG. 8 is a flowchart of a process for balancing forecast performance objectives, according to some embodiments.

### DETAILED DESCRIPTION

Referring generally to the figures, aspects of the present application relate to efficiently and effectively forecasting a timeseries of future values of a first variable. The first variable can be associated with a set, for example a set of results that satisfy one or more search criteria, for example such that the first variable is a function of values associated with members of the set (e.g., distinct values of second variables associated with the different members a set of search results). The first variable is a function of the second variables (e.g., a minimum of the second variables, a maximum of the second variables, an average of the second variables, a median of the second variables, a standard deviation of the second variables, a sum of the second variables, a product of the second variables, etc.). In the scenarios contemplated herein, the second variables are time-varying, such that the first variable is also time-varying.

Some embodiments of the present disclosure relate to forecasting timeseries values of one or more travel characteristics associated with travel options, for example in response to a user request for travel options that satisfy a search query. Each travel option provided as a result to the search query can be associated with its own travel characteristic, and the overall set of results can also have an associated travel characteristic (e.g., defined as a function of the travel characteristics of the individual results). Characteristics of travel options can vary as a function of the time at which the search is executed and up through a future date of a travel event. In view of the structure of such data, technical challenges exist for forecasting future travel characteristics, for example future values associated with overall set of travel options satisfying a search query.

In some embodiments, the present disclosure relates to prediction of a travel characteristic over a future time period, for example values of a travel characteristic associated with a travel options, accommodation options, etc. at time steps between a current time and a time of a travel event (e.g., a time at which a flight is set to occur). Travel characteristics can be dynamic in a manner that does not necessarily follow preset rules (e.g., is not based on physics or other underlying analytical rules). Further, travel characteristics can relate to individual travel options (e.g., particular flights on particular days) and to sets of travel options satisfying search criteria (e.g., available flights on a given day between selected destinations). A travel characteristic relating to a set of travel options satisfying a search query (e.g., a first variable associated with an overall set of search results) can be a function of (e.g., minimum of, maximum of, average of, etc.) travel characteristics of individual travel options. Such travel characteristics can also be time-varying across a time period leading up to a travel event. A travel characteristic of an overall set of results of a travel search query can be difficult predict because of dependence on travel characteristics of individual travel options, because an associated event (e.g., flight, travel day, etc.) has not yet occurred such that prior data associated with particular travel options (or sets thereof) over a corresponding period of interest may not be available, and because timeseries values for travel characteristics over future time periods may be of interest (e.g., as compared to individual values or classifications). The technical implementations described herein are particularly well-suited to addressing such practical challenges in predicting timeseries data for travel characteristics.

The teachings herein present approaches for training and executing one or more first models to forecast values of the first variable and one or more second models to forecast values of the multiple second variables, and combining such forecasts to arrive at a combined, composite timeseries forecast for the first variable. The number of the multiple models and the details of model combination (e.g., a switching point between models) can be tuned according to teachings herein to find an optimal balance of forecast accuracy and computational complexity and resource usage. As described in detail below, the teachings herein thereby provide for increased forecast performance and reduce computation complexity and computing resource usage as compared other possible implementations.

Another aspect of the technical features herein is the scalability of the training data generation, model training, and timeseries forecasting in a manner suitable for mass deployment, for example deployment via a public webpage with large numbers of independent users. For example, teachings herein relate to automatically executing searches over time to collect timeseries data associated with search results, without reliance on human-input search requests, thereby ensuring availability of suitable timeseries training data which then improves availability of multiple models used for timeseries forecasting in response to different user search requests. Using such processes, the systems taught herein can generate timeseries forecasts of the first variable even for outlier search requests for which historical user search data would be limited. Various other features herein relating to reducing computational resource demands while preserving forecast accuracy also enable the technical solutions described herein to be deployed at scale for large applications, for example for scenarios having hundreds, thousands, hundreds of thousands, etc. possible search queries (and associated result-set-level variables) that could be of interest to different users.

These and other technical advantages of the teachings herein will become apparent from the following detailed description.

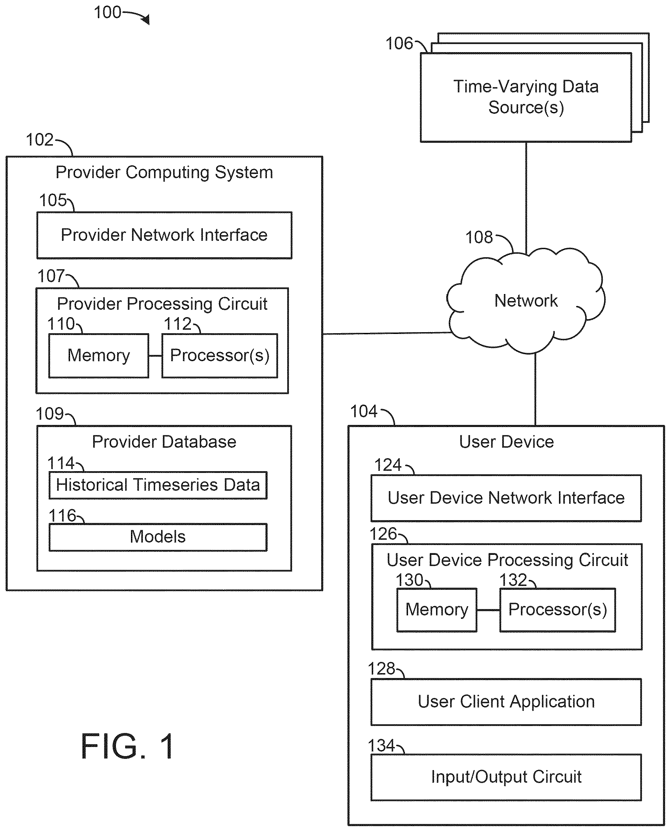

Referring now to FIG. 1, a system 100 for providing timeseries forecasts is shown, according to some embodiments. As shown in FIG. 1, the system 100 includes a provider computing system 102, a user device 104, and one or more time-varying data source(s) 106 communicable via a network 108. In some embodiments, any number of additional user devices 104 can be included (e.g., hundreds, thousands, millions as large numbers of users can be supported by the technologies herein). The network 108 can be or include the Internet, an intranet, a cellular network, a WiFi network, etc. in various embodiments. In some embodiments, the provider computing system 102 is physically remote from the user device 104 and/or the one or more time-varying data source(s) 106.

The provider computing system 102 is shown as including a provider network interface 105, a provider processing circuit 107, and a provider database 109. The provider network interface 105 facilitates connection of the provider computing system 102 to the network 108. The network interface 105 can support communication via the network 108 between the user device 104 and the provider computing system 102 and/or between the street map service 106 and the provider computing system 102. The network interface 105 may include communications ports (e.g., Ethernet ports), routing capabilities, a cellular modem, a wireless transceiver or beacon, etc. in various embodiments. In some embodiments, the network interface 105 includes cryptographic capabilities to establish a secure communications session.

The provider processing circuit 107 is structured to control, at least partly, the provider computing system 102 and to execute or otherwise enable the various operations attributed herein to the processing circuit 107. For example, the provider processing circuit 107 can execute the various processes shown in the figures and described in detail below, in various embodiments. The processing circuit includes memory (one or more non-transitory computer readable media) 110 and one or more processors 112. The processor(s) 112 may be implemented as one or more general-purpose processors, application specific integrated circuits (ASICs), field programmable gate arrays (FPGAs), digital signal processors (DSPs), other suitable electronic processing components, or a combination thereof. The memory 110 may be implemented as RAM, ROM, NVRAM, Flash Memory, hard disk storage, solid state storage, etc. and may store data and/or computer-readable instructions (programming, logic, code) for providing the features described herein. The memory 110 stores computer-readable instructions that, when executed by the processor(s) 112, causes the processor(s) 112 to perform some or all of the operations attributed herein to the provider processing circuit 107 and/or provider computing system 102, in various embodiments.

The provider database 109 is structured to retrievably store (e.g., in non-transitory computer memory) data usable by the provider processing circuit 107 for providing operations as described herein. For example, the provider processing circuit 107 may be structured to read data from the provider database 109 and write data to the provider database 109. The provider database 109 can include various database components in various embodiments, for example memory in hard drive storage, disk storage, solid state storage, etc.

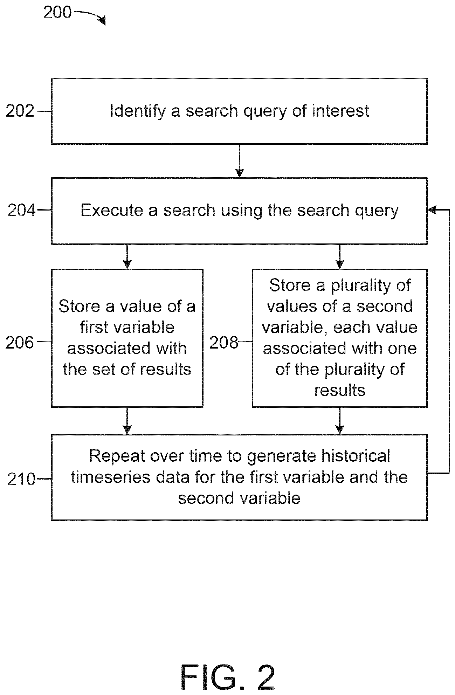

As shown in FIG. 1, the provider database 109 stores historical timeseries data 114 and models 116. The historical timeseries data 114 can be collected by the provider computing system 102 from the time-varying data source(s) 106 over time, for example as shown in FIG. 2 and described in detail below with reference thereto. The historical timeseries data 114 can include timeseries data for a first variable associated with a search query (i.e., with an overall set of results of the search query) and timeseries data for second variables associated particularly with different results of the search query (e.g., a separate timeseries for each result in a set). As an illustrative example, if a set of results includes four members, the historical timeseries data 114 associated with that set of results can include five timeseries: one for each of the four members and one for the variable associated with the overall set of results. In some embodiments, the historical timeseries data 114 includes travel options and travel characteristics of such travel options returned as result of search queries. Each timeseries can include timestamps and values associated with the timestamps, such that a timeseries includes values of the same variable at different times (e.g., indicating a time at which a search was executed which generated the value).

The models 116 can include untrained models (e.g., suitable to initiate training processes described elsewhere herein) and trained models (e.g., resulting from training according to processed described elsewhere herein. The models 116 can include one or more types of models, for example analytical models, regression models, artificial intelligence models, neural networks (e.g., convolutional neural networks, feedforward neural networks, long-short-term-memory networks, recurrent neural networks, generative adversarial networks, etc.), decision trees, Bayesian classifiers, other deep learning or artificial intelligence models, etc. in various embodiments. In some embodiments, the models 116 can be or include generative AI models, such as transformer models (e.g., generative pretrained transformers), generative adversarial network (GAN) models, etc. In some embodiments, the models 116 include, for each of multiple search queries, a set-level model configured to predict values of the first variable associated with the overall set of results to the search query and one or more result-level models configured to predict values of second variables associated with particular results of the set of results. In some embodiments, the models 116 include a search-level model configured to predict a travel characteristic for an overall set of travel options satisfying a search query and one or more option-level (result-level) models configured to predict travel characteristics associated with particular travel options including in the set of travel options satisfying the search query (e.g., individual offers for a travel item from a travel service provider, such as individual offers from a flight provider for a particular flight or individual offers from an accommodation (e.g., hotel or vacation rental) provider for a particular accommodation at a particular time.

The time-varying data source(s) 106 are configured to provide time-varying data of interest to the system 100. The time-varying data source(s) 106 can include sensors, meters, machines, equipment, vehicles, databases, data lakes, computers, servers, cloud systems, data centers, etc. in various embodiments. In some embodiments, the time-varying data source(s) 106 are configured to receive search queries from the provider computing system 102 and/or the user device 104 via the network 108 and return results to such search queries in response to the search queries. Results provided by the time-varying data source(s) 106 can include current data at the time the search queries are submitted and/or results returned. Such data can change over time, such the same search query will cause different data to be obtained from the time-varying data source(s) at different if executed at different times. As shown in FIG. 1, the system 100 is configured such that the provider computing system 102 can cause the time-varying data soruce(s) to provide responsive data via network 108 on demand. As described with reference to FIG. 2, described below, timeseries data can be collected by repeatedly executing a search overtime to collect data from the time-varying data source(s) 106 over time. Various teachings herein relate using timeseries data from the time-varying data source(s) 106 to predict future values for variables relating to the results provided by the time-varying data source(s) 106.

For example, the one or more data sources 106 may be computing systems (e.g., servers, cloud-based platforms, etc.) operated by providers of travel options. The one or more data sources may provide, in response to a search query, travel options that satisfy the search query and one or more travel characteristics associated with each travel option. In some example, the travel options are flight options and the one or more travel characteristics identify pricing for each flight option. The travel options and/or the travel characteristics can vary depending on the time at which the search is executed (e.g., a time at which the search query is provided to the one or more data sources 106) (e.g., pricing for a particular flight option changing over time).

The user device 104 as shown in FIG. 1 can be a personal computing device, for example a smartphone, tablet, desktop computer, laptop computer, virtual reality headset, augmented reality headset, etc. As shown in FIG. 1, the user device 104 includes a user device network interface 124. The user device network interface 124 facilitates connection of the user device 104 to the network 108. The user device network interface 124 can support communication via the network 108 between the user device 104 and the provider computing system 102 and/or between the user device 104 and the street map service 106. The user device network interface 124 may include communications ports (e.g., Ethernet ports), routing capabilities, a cellular modem, a wireless transceiver or beacon (e.g., Bluetooth, near-field communication), etc. in various embodiments. In some embodiments, the user device network interface 124 includes cryptographic capabilities to establish a secure communications session.

The user device processing circuit 126 is structured to control, at least partly, the user device 104 and to execute or otherwise enable the various operations attributed herein to the user device 104. For example, the user device processing circuit 126 can execute the various processes shown in the figures and described in detail below, in various embodiments. The user device processing circuit 126 includes memory (one or more non-transitory computer readable media) 130 and one or more processors 132. The processor(s) 132 may be implemented as one or more general-purpose processors, application specific integrated circuits (ASICs), field programmable gate arrays (FPGAs), digital signal processors (DSPs), other suitable electronic processing components, or a combination thereof. The memory 130 may be implemented as RAM, ROM, NVRAM, Flash Memory, hard disk storage, solid state storage, etc. and may store data and/or computer-readable instructions (programming, logic, code) for providing the features described herein. The memory 130 stores computer-readable instructions that, when executed by the processor(s) 132, causes the processor(s) 112 to perform some or all of the operations attributed herein to the user device processing circuit 126 and/or user device 104, in various embodiments.

FIG. 1 shows the user device 104 as including a user client application 128. In some embodiments, the user client application 128 is provided within or by the user device processing circuit 126 (e.g., via instructions stored in memory 130 and executed by processor(s) 132). The user client application 128 can include application code, data, application programming interface(s), etc. to enable use of the user device 104 to access and interoperate with the provider computing system 102. For example, the user client application 128 can be provided as a mobile application on the user device 104, with the mobile application dedicated to enabling features described herein. In some embodiments, the user device 104 includes a web browser which provides an alternative or additional manner for the user device 104 to interoperate with the provider computing system 102. In some embodiments, the user client application 128 enables a user to search for and book travel options using the user device 104.

The user device 104 is further shown as including an input/output circuit 134. The input/output circuit 134 can include various components for providing outputs to a user of the user device 104 and receiving inputs from a user of the user device 104. For example, the input/output circuit 134 can include a display screen, a touchscreen, a mouse, a button, a keyboard, a microphone, a speaker, an accelerometer, actuators (e.g., vibration motors), including any combination thereof, in various embodiments. The input/output circuit 134 may also include circuitry/programming/etc. for running such components. The input/output circuit 134 thereby enables communications to and from a user, for example communications relating to search requests, actions to be executed, etc.

Referring now to FIG. 2, a flowchart of a process 200 for training data generation is shown, according to some embodiments. Process 200 can be executed by the system 100, for example by the provider computing system 102 in communication with the time-varying data source(s) 106.

At step 202, a search query of interest is identified. A search query identifies one or more criteria to be satisfied by results to the search query. The possible criteria vary by domain, industry, application, etc. In embodiments relating to travel options, the criteria can include date of travel, time of day, travel modality (e.g., flight, bus, train, ferry, etc.), number of stops or layovers, departure location, destination, etc. In some embodiments, where the relevant criteria are finite and/or otherwise reasonably limited, step 202 can include identifying all possible search queries and selecting one of the possible search queries for use in a given instance of executing process 200. In some embodiments, for example where the possible criteria are infinite or otherwise large in scope, step 202 can include generating a list of frequent (popular, etc.) search queries entered by users (e.g., entered via graphical user interfaces presented on one or more user devices 104) or otherwise determined from historical data to be of particular interest, and selecting from said list a search query for use in a given instance of executing process 200. In some embodiments, the search query is identified in step 202 by prompting a user to input the search query via user device 104 and receiving the search query via the user device 104 (or otherwise accepting manual entry of the search query). A selected search query can thereby result from step 202.

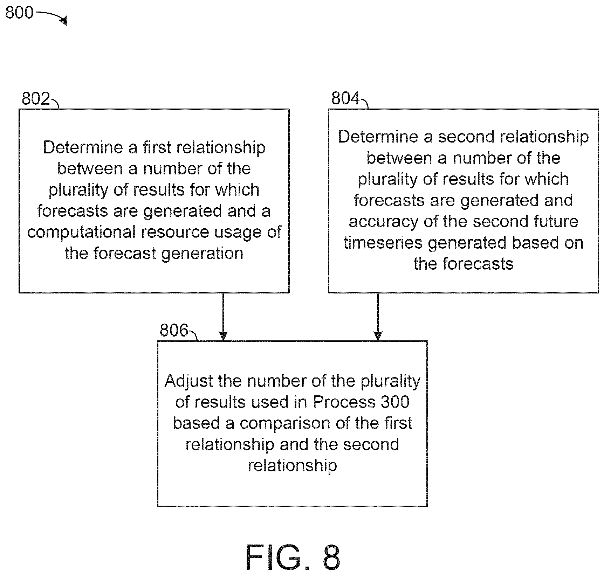

At step 204, a search is executed using the search query. Step 204 can include determining a set of results that satisfy the search query at the time of executing the search. For example, step 204 can include causing, by the provider computing system 102, the time-varying data source(s) 106 to provide results satisfying search criteria. Executing the search can include rules-based application of deterministic logic (e.g., Boolean logic) and/or executing of advanced search algorithms. In some embodiments, executing the search in step 204 includes pruning a list of search results, for example ranking the set of search results based on values of a variable associated with the results or other attributes of the search results and selecting a number of the top results (for example, a number optimally tuned according to process 800 of FIG. 8, described below).

Each result (i.e., each member of a set of search results) can include a variety of attributes, characteristics, values for different variables, etc. In the embodiments contemplated herein, each result is associated with a current value for a variable, i.e., a value taken on by the variable at the time the search is executed in step 204. The set of search results is associated with a current value determined as a function of the current values associated with the multiple results. For example, the set of search results can include travel options and associated travel characteristics.

The search results obtained by executing the search in step 204 can also include additional timing information or other attributes for facilitating generation of timeseries training data. For instance, in one scenario results are associated with different events to occur at future points in time, and the data obtained in step 204 includes a timing of the associated with such events. For example, a given result can include data including an identifier of the result (e.g., a name, description, etc.), a value of a variable, and a timing value (e.g., a duration until or since an event associated with the result, etc.).

To provide a particular example for illustrative purposes, executing the search in step 204 can includes running a search for flights that satisfy search criteria indicating a departure airport (e.g., O'Hare) and arrival airport (e.g., LaGuardia) (or other round-trip or multi-destination trip itinerary), and other limitations such as date of the flight, day of the week, type of seat, or number of layovers (e.g., Monday, business class, direct flights only). Executing the search in step 204 can include prompting different airlines or other service providers (operators of time-varying data source(s) 106) to provide results indicate available flights and pricing information for each available flight. Each result represents an available flight associated with a price and an amount of time (e.g., number of days) until that flight is scheduled to occur. Flight pricing is typically dynamic such that executing a search in step 204 captures values associated with the point in time at which the search is performed (e.g., relative to a date of the flight). Various other examples are possible, involving other travel modalities (e.g., train, bus, ferry, etc.) or accommodations (e.g., hotel or vacation rental pricing or availability), other types of goods or services, or other types of data points and industries (e.g., values of operational data in an industrial controls application, etc.).

In step 206, a value of a first variable associated with the set of results returned from step 204 is stored, for example in the provider database 109. The first variable can be a function of values for a second variable associated with individual results of the set of results. In some embodiments, the first variable is the minimum of the values for the second variable over the set of results (e.g., to continue the example discussed above, a lowest price or other characteristic of a set of available flight options satisfying the search criteria). As another example, the first variable is determined based on a maximum, average, median, sum, product, standard deviation, etc. of the values for the second variable over the set of results. Step 206 can include determining a value for the first variable based on the set of results. In some embodiments, the value for the first variable is stored with timing information associated with execution of the search and/or the search results.

In step 208, values for the second variable associated with the individual results of the set of results are stored, for example in the provider database 109. Each value can be associated with a same variable (e.g., descriptive of the same type of condition, parameter, characteristic, etc.) but for different results of the set of results. To continue the example above, each value can be a price or other characteristic of each available flight option satisfying the search criteria. In some embodiments, the values are stored with result identifiers or in a data format that separates the values for the different results. In other embodiments, the values are stored together agnostic of the particular results associated with the different values. In some embodiments, the values for the second variable are stored with timing information associated with execution of the search and/or the search results.

At step 210, the search and storage steps (204, 206, 208) are repeated over time to generate historical timeseries for the first variable and the second variable. A search can be reexecuted using the same search query at a set frequency (e.g., hourly, daily, weekly, etc.) in step 204 such that the current values for the first variable and the second variable are collected at different points in time and stored in step 206 and step 208. In the flight searching example above, step 210 enables time-varying flight pricing data to be captured as a timeseries, and captured automatically without relying on user inputs of flight searches. As values are collected over time with associated timing information, the values can be compiled in step 210 into historical timeseries for the first variable and the second variable showing values of the variables at different time steps over a time period during which process 200 is executed.

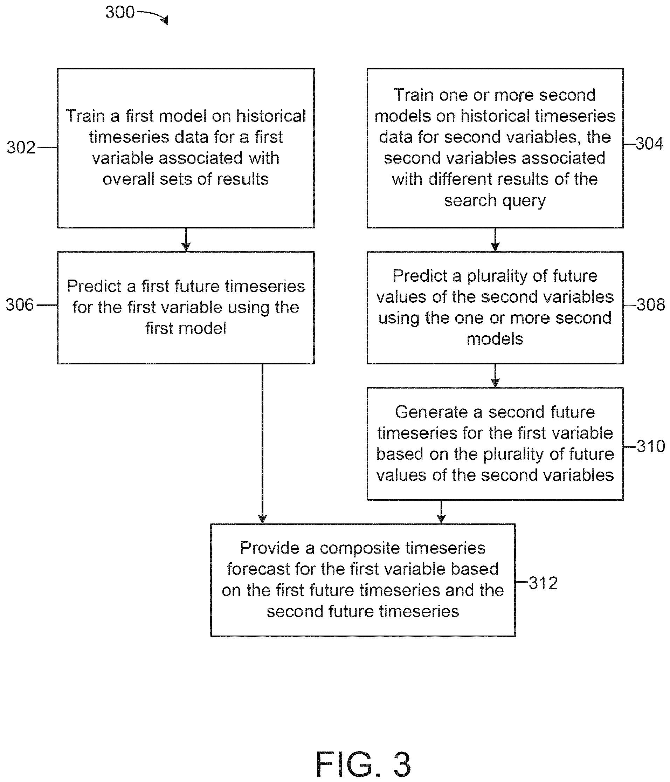

Process 200 can also be repeated for a variety of search queries, for example all possible search queries, for a set of frequent search queries (e.g., a set of search queries covering 80% of expected user activity, covering 90% of user activity, etc.). Historical timeseries data can thus be collected for different search queries in process 200. Process 200 can thereby generate a robust set of historical timeseries data that can be used in model training as described with reference to FIG. 3. The historical timeseries data can include search queries associated with events that have already occurred (e.g., flight-related data such as a timeseries of prices up to the flight date for flights which have already occurred) and events that have not yet occurred (e.g., flight-related data up to a current time that predates a future flight).

Each timeseries can include a value for a variable for each time step in a time period, for example a time period preceding an event date associated with the search query or search result. In some embodiments, timeseries for different results, queries, etc. are aligned by aligning such event dates for different timeseries such that timeseries represent comparable trajectories of variables over a time period leading up to an event date. In some embodiments process 200 includes various data preprocessing steps, for example data extrapolation steps to fill missing values, data normalization steps, and other automated data clean-up steps that can prepare the timeseries data generated in process 200 for use in further processing, for example for use in process 300 show in FIG. 3 and described in detail with reference thereto.

Referring now to FIG. 3, a process 300 is shown, according to some embodiments. Process 300 can be execute by the provider computing system 102, for example by the provider processing circuit 107 interoperating with the provider database 109.

At step 302, a first model is trained on historical timeseries data associated with the first variable, i.e., a first variable associated with overall sets of search results. The first model can thus be characterized as a search-level, query-level, or set-level model. In the flight-related or other travel-related examples given above, the first model can be trained to forecast the minimum price (or other travel characteristic) for a flight satisfying the search query for each time step from the current time up to the date of the flight (or some subset of the time period).

The first model can be trained to forecast, from a given point of time in the time series, the values for the first variable for the subsequent time steps based on the values for the preceding time steps. Such training can be performed using multiple historical timeseries available from process 200.

For instance, where a search query interest identifies search criteria including an event date (e.g., a date that has not yet occurred such as the date on which a user desires to travel) and a second criterion, the event date can be omitted from the search criteria in order to identify a broader set of data for which historical data is available (e.g., satisfying the second criterion but not the event date), including timeseries that include data up to respective event dates. In the flight-related examples herein, the first model may be trained on data for all flights between two airports identified in the search query, or on all flights between the two airports on a certain day of the week or certain time of day, including flights which have already occurred such that training data which covers periods up to flight dates (in order to capture the dynamics which occur as the flight date approaches). Such an approach enables availability of sufficient training data for training of a first model in step 302.

In some embodiments, training the first model includes processing the available timeseries data as follows. A timeseries can be split into time steps preceding a given time step and a timeseries subsequent to the given time step. The first model can be then be used to forecast values for the time steps subsequent to the given time steps based on the values in the time series preceding the given time step. Those forecasts can then be compared to the historical values present in the timeseries to assess forecast error (e.g., root mean squared error). Model parameters (e.g., weights in a neural network) can then be adjusted to reduce the error. Such training steps can be iterated both by moving the given time step forward and backwards in time along the timeseries and by using different historical timeseries. Such an approach enables machine learning such that prediction error of the first model can be expected to converge to a minimum value after a number of training cycles. A first model can thereby be trained in step 302.

In some embodiments, model training uses a transfer learning approach. In such embodiments, a base, starting model can be trained on a large number of historical timeseries associated with a variety of different search queries. Such a timeseries may capture the general dynamics of the relevant systems, data, variables, etc. The general model can then be used as the initial, starting model for step 302, with step 302 tuning the model to a particular search query or set of search queries. Such an approach can enable model training in step 302 where only limited data relating to a particular search query or set of search queries is available.

At step 304, one or more second models are trained on historical timeseries data for second variables associated with particular search results. The one or more second models can be referred to as one or more result-level or member-level models. In some embodiments, multiple second models are trained, with each second model trained to predict timeseries values associated with a particular result (e.g., to predict a price or other value associated with each different flight satisfying the search query, predict a travel characteristic associated with each different travel option satisfying the search query). In some embodiments, a unified second model is trained to predict multiple timeseries values associated with multiple results. Step 304 can be performed in a similar manner as step 302, while using historical timeseries for the second variable (associated with individual results) rather than the first variable (associated with overall sets of results).

At step 306, a first future timeseries for the first variable is predicted using the first model trained in step 302. The first future timeseries includes future values of the first variable associated with a particular search query, for example a value for each time step (e.g., each hour, each day, each week, etc.) from a current time to an event date (or other endpoint). In some embodiments, the first model can use values of the first variable up to a current time as inputs in generating the future timeseries. Such inputs can be collected according to process 200, in some embodiments. The first future timeseries is thereby forecast directly at the set-level without individually forecasting result-level values (i.e., values for the second variable). In some embodiments, the first future timeseries is forecast by forecasting minimum values of a travel characteristic for a set of travel options without individually forecasting the travel characteristics for the individual travel options. Step 306 can thus be characterized as providing set-level forecasts using a set-level model based on set-level input data.

At step 308, future values of the second variables are predicted using the one or more second models. The prediction in step 308 uses the one or more second models to predict values that will be taken on by individual results of a search query at future time steps. Future timeseries values for the second variable (e.g., separate values for each of a number of results) can thus be output by the one or more second models in step 308, with the one or more second models using values of such second variables up to a current time as inputs, in some embodiments. In some embodiments, step 308 includes predicting travel characteristics for multiple particular travel options. Step 308 can thus be characterized as performing result-level predictions using one or more result-level model(s) and result-level input data.

At step 310, a second future timeseries for the first variable is generated based on the future values for the second variables predicted in step 308. Because the first variable is a function of the second variable (e.g., maximum, minimum, average, sum, etc. as described above), forecast values for the first variable can be derived from the predicted future values for the second variables output by step 308. Step 310 can include assessing, for each time step over a future time period, the values for the second variables associated with that time step to determine the value for the first variable that would result from those values for the second variables. For example, where the values for the second variables are prices of the different flight options satisfying the search query, step 310 can include picking the lowest flight price for each future time step and compiling the selected prices into a timeseries (noting that the lowest value may be associated with different results at different time steps). A second future timeseries for the set-level first variable can thereby be generated which is a result of the result-level predictions made using the one or more result-level model(s) and the result-level input data.

At step 312, a composite timeseries forecast for the first variable is provided based on the first future timeseries (from step 306) and the second future timeseries (from step 308) for the first variable. The composite timeseries forecast is thus based both on a set-level forecast made using a set-level model based on set-level input data and on result-level forecasts made using one or more result-level models based on result-level input data. Accordingly, the composite timeseries forecast output by process 300 is based on a combination of modeling approaches at different levels of granularity. In some embodiments, the composite timeseries forecast output by process 300 is based on a combination of modeling travel characteristics of particular travel options and modeling a travel characteristic associated with an overall set of travel options.

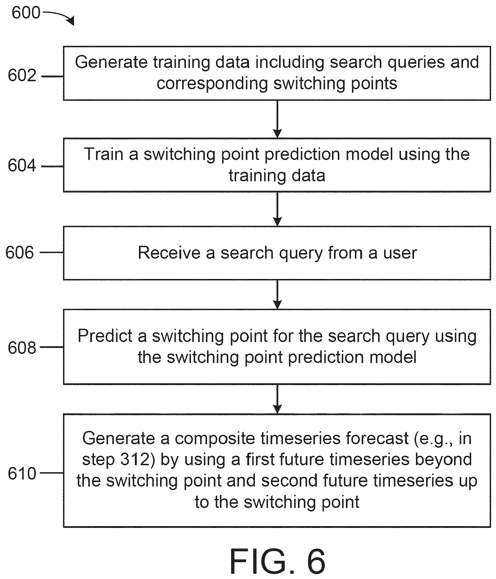

Providing the composite timeseries forecast at step 312 can include combining the first timeseries forecast and the second timeseries forecast in a variety of manners in different embodiments. As described below with reference to FIGS. 6-7, one aspect of the present disclosure is a determination that the second timeseries forecast may outperform (e.g., have greater accuracy than) the first timeseries forecast for near-term time steps (e.g., up to a switching point) and underperform the first timeseries forecast in later time steps (e.g., after the switching point) (or vice-versa in other embodiments). Accordingly, step 312 can include generating the composite timeseries by using values from the second timeseries forecast for time steps up to a switching point and using values from the first timeseries forecast for time steps after the switching point (or vice-versa in other embodiments). Accordingly, in some embodiments, the second timeseries forecast of a travel characteristic is used from the current time up to the switching point and the first timeseries forecast is used for time steps from the switching point to the date the travel option occurs (e.g., the point at which a flight takes off). The switching point can be determined dynamically, for example as described with reference to FIG. 6 below.

In some embodiments, step 312 includes generating the composite timeseries by taking an average of the first timeseries forecast and the second timeseries forecast. For example, a weighted average can be used that increases a weight on the first timeseries forecast for time steps further into the future, such that the weighted average reflects the relative accuracies over different time horizons of the first timeseries forecast and the second timeseries forecasts. Various other approaches for combining or selecting between the first timeseries forecast and the second timeseries forecast are possible in various embodiments.

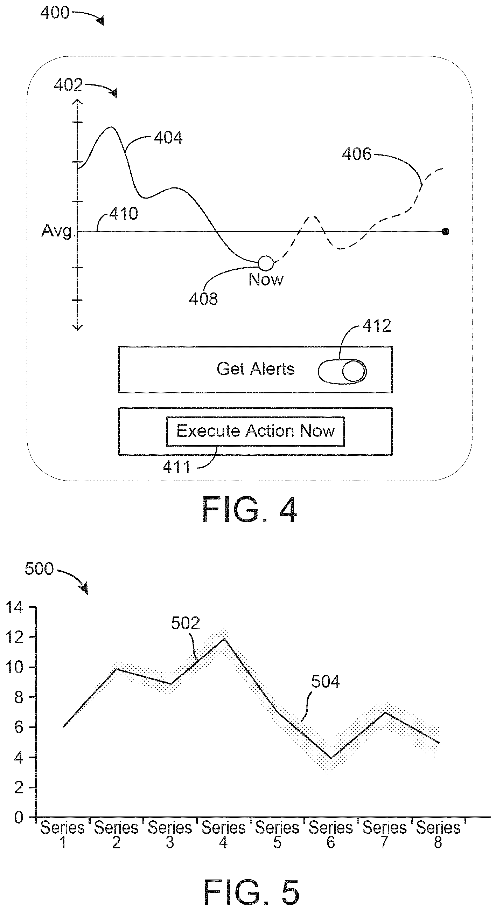

Referring now to FIG. 4, a graphical user interface 400 is shown, according to some embodiments. The graphical user interface 400 can be provided by on the user device 104 by a user client application 128 via input/output circuit 134, for example based on forecast data received from the provider computing system 102. In some embodiments, the graphical user interface 400 is provided as part of an application or website for searching, assessing, and booking travel options.

The graphical user interface 400 includes a graph 402 plotting values of the first variable over time. The graph 402 includes a plot of historical values of the first variable represented by solid line 404 (for example, historical values as collected by process 200) and forecast values represented by dashed line 406 (for example, the composite forecast output from process 300). An icon 408 indicates the current time and separates the solid line 404 form the dashed line 406. The graph 402 visualizes for a user the trend in historical values of the first variable along with forecast future values of the first variable. A horizontal line 410 indicates the average value of the first variable over the time period plotted (e.g., determined based on both the historical values and the forecast values).

The graph 402 provides a substantial advantage with respect to determining when to execute an action which involves the value of the first variable. In the example shown, the value of the first variable is currently at its historical lowest point and is projected to be higher at future times. If low value of the first variable is preferable, a user can select a button 411 to cause execution of an action now to take advantage of the current low value of the first variable relative to historical values and relative to forecast future values. For example, where the first variable is a price of a flight option, the user may select the button 411 to initiate booking of the flight option or to proceed to detailed information about the available flight options. If low value of the first variable is not preferable, the graphical interface 400 and the forecasting features described herein enables the user to decide to wait to execute the action until a later time, as without the forecast data plotted, the graph of historical data only may suggest to the user to act before the value drops even lower. Various such advantages can thus be enabled by the teaching herein.

The graphical user interface 400 also includes an alerts toggle 412. The alerts toggle 412 is selectable to turn on or off an alert generation feature executable by the user device 104 and/or the provider computing system 102. When toggled on, the alert generation feature provide alerts to the user (e.g., push notifications, emails, text messages, etc.) relating to the value of the first variable. In various embodiments, alerts can be generated in response to a change in the value of the first variable, in response to a greater than threshold change in the value of the first variable, a change in the value of the first variable that differs from a forecast change, at a set frequency (e.g., daily, weekly, etc.), when the value crosses the average represented by horizontal line 410, or other criteria in various embodiments. In some embodiments, the user device 104 and/or the provider computing system 102 generates alerts by executing a model that predicts a likelihood of engagement with the alert (e.g., a likelihood that the user will be interested in a particular change in the value of a variable that occurs), for example based on a user's prior activity, and determines to generate and alert in response to the predicted likelihood exceeding a threshold (and/or omits providing an alert if the predicted likelihood is below a threshold), thereby reducing alert fatigue (a technical problem with technologies that output issuing many unhelpful alerts which leads to reduced user engagement with alerts) and reducing network usage and other computing demands by omitting alerts not predicted to be of interest to a user (e.g., as compared to a strict rules-based alert such as providing an alert every time a value changes).

Referring now to FIG. 5, a graph 500 is shown, according some embodiments. The graphical user interface 400 can be adapted to include features of the graph 500. For example, the dashed line 406 representing forecast values can be modified to reflect a visualization as presented on graph 500.

As shown in FIG. 5, graph 500 includes a plotted line 502. The plotted line 502 is shown as line graph connected forecast values of a variable (e.g., travel characteristic), for example a composite future timeseries as output from process 300. Graph 500 is also shown as including a confidence band 504 plotted as an area surrounding the plotted line 502. The confidence band 504 illustrates a range of possible values for the forecast variable, for example values expected to occur within a certain degree of confidence (e.g., within a certain probability). In some embodiments, process 300 can be adapted to provide, along with forecast values, an indication of a degree of confidence in each forecast value in a timeseries. The forecast values and confidence intervals can then be plotted as illustrated in FIG. 5, for example such the graph 500 conveys a range of possible values that may occur at future times while reflecting uncertainty in values being forecast.

Referring now to FIG. 6, a flowchart of a process 600 for optimally combining model forecasts, according to some embodiments. Process 600 can be executed as part of, in parallel with, etc. process 300, for example by the system 100 (e.g., by the provider computing system 102 interoperating the with user device 104).

At step 602, training data including search queries and model prediction errors is generated. Training data can be generated in step 602 using model trained and used in iterations of process 300. In some embodiments, a large number of first, search-level models (from iterations of step 302 for different search queries) and a large number of second, result-level models (from iterations of step 304 for different search queries) are obtained and prediction errors of such models determined (e.g., root mean square error (RMSE), mean absolute percentage error (MAPE)) using actual values which occur and are collected as historical data. Error can be assessed at each future time period over a prediction horizon (e.g., mean absolute percentage error for each day over a future time period).

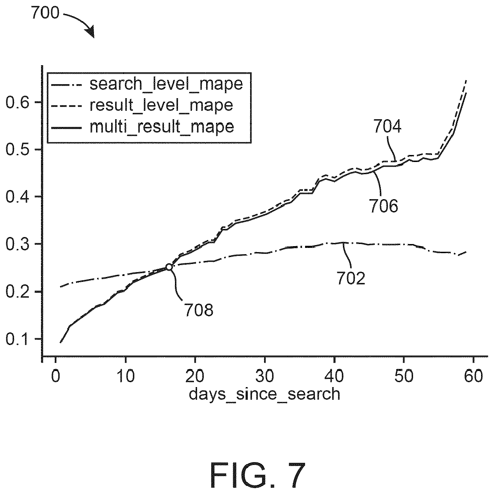

For illustration of errors assessed in step 602, FIG. 7 shows a graph 700 of prediction error (shown as MAPE) over a time horizon for different models associated with the same search query. The graph 700 includes a first line 702 plotting MAPE over time for a first, search-level model (e.g., as trained in step 302) trained on historical values of a first variable associated with an overall set of search results and configured to predict future values of that first variable. The graph 700 also includes a second line 704 plotting MAPE over time for a second, result-level model (e.g., as trained in step 304) trained on values of historical values of a second variable associated with an individual result of a set of search results and configured to predict future values of that second variable). The graph 700 also includes a third line 706 plotting MAPE over time for forecasts of the first variable derived from the predictions of the second, result-level model (e.g., as in step 310). The graph 700 thereby illustrates relative error (and, inversely, accuracy) of the different predictions over time, i.e., from a subsequent future time step through a future time period to an end of a prediction horizon.

As shown in FIG. 7, the first line 702 is above the second line 704 and the third line 706 before a switching point 708, and the first line 702 is below the second line 704 and the third line 706 after the switching point 708. Accordingly, the graph 700 illustrates that predictions generated using the second, result-level model are more accurate (have less error) than predictions generated using the first, search-level model before the switching point 708, and that predictions generated using the first, search-level model are more accurate (have less error) than predictions generated using the second, result-level model after the switching point 708. In examples involving travel characteristics, an aspect of the present disclosure is a finding that predictions of particular travel characteristics for particular travel options may be more accurate in the near-term than predictions for a travel characteristic for an overall set of travel options, while the prediction of the travel characteristic for the overall set of travel options may be more accurate for longer-term predictions.

Because the underlying characteristics of the data (e.g., data variability, predictability, etc.) and the trained models are different for different search queries, an aspect of the present disclosure is that the switching point will be different for different search queries. For example, the switching point may different for travel-related search queries involving different cities, different days of the week, different travel modalities, etc. depending upon the dynamics of travel characteristics for different travel options.

Step 602 can include identifying the switching point 708, i.e., identifying the amount of time from when the prediction is made until the first, search-level model starts outperforming (becomes more accurate than) the second, result-level model(s). The switching point (e.g., units of time) can then be stored as training data along with information on the corresponding search request. By determining the switching point for groups of models associated with numerous different search requests, a set of training data can be generated that includes search request information (e.g., different search criteria for each search request, search timing, etc.) and corresponding switching points. Training data including search queries and corresponding switching points can thus be generated in step 602.

At step 604, a switching point prediction model is generated using the training data. The switching point prediction model is configured to receive search request information (e.g., search criteria, search timing, etc.) as an input and to output a predicted switching point. The switching point prediction model can be a machine learning model, artificial intelligence model, neural network, etc., and the training data generated in step 602 is suitable for performing such training using various machine learning approaches. Advantageously, even where no analytical or rules-based association between search request information and switching point may be apparent (e.g., derivable from logic or physics or the like), the data-driven, artificial intelligence approach of steps 602-604 can provide a technological solution capable of accurately estimating different switching points for different search queries.

At step 606, a search query is received from a user. The search query can be received via the input/output circuit 134 of the user device 104, for example via a graphical user interface provided by the user client application 128. For example, a user may desire to see a current value of a first variable associated with the set of search results satisfying the search query and forecasts for future values of that first variable. For example, the search query may be a travel-related search query indicating a date of travel, a destination, and departure location, etc.

At step 608, an switching point for the search query is predicted using the switching point prediction model trained in step 604. The switching point prediction model can take the search query as an input (e.g., as formatted in a feature generation process) and is configured to output a switching point, i.e., an amount of time until a search-level model associated with the search query is predicted to become more accurate than result-level model(s) associated with the search query. Advantageously, step 608 can use the switching point prediction model to predict the switching point directly based on the search query (e.g., based on user-input flight-related criteria in the examples described above) without calculating model errors or otherwise comparing predictions of the search-level model and the result-level model(s) associated with the search query (and without running a search for results of the search query), and is therefore computationally efficient as compared to other possible procedures for assessing and comparing relative model errors for assessing model performance and/or finding and assessing search results, while also providing a predictive capability not indicated by individual values of MAPE, RMSE, or other indications of current model performance.

At step 610, a composite timeseries forecast is generated (e.g., as in step 312) by (A) using a first future timeseries generated using a first, set-level model (e.g., as generated in step 306) beyond the switching point predicted in step 608 and (B) using the second future timeseries up to the switching point predicted in step 608. A composite timeseries forecast is thereby generated which uses outputs of the models predicted to be more accurate in different subperiods of a future time period up to a prediction horizon (e.g., up to an event date such as a flight date). In some embodiments, other approaches to combining the first future timeseries and the second future timeseries are possible, for example using a weighted average having the predicted switching point as a parameter.

Furthermore, although the examples herein primarily contemplate the first, set-level model being more accurate for longer-term predictions and the second, result-level model(s) being more accurate for short term predictions (as in FIG. 7), that relationship may be reversed in some scenarios depending on the dynamics of the variables of interest. Accordingly, in some scenarios, the switching point determined in process 600 is used to generate a composite timeseries forecast such that first future timeseries generated using the first, set-level model up to the switching point and the second future timeseries based on one or more result-level model(s) after the switching point. In some embodiments, process 600 can include automatically determining which model predictions should be used before the switching point and which model predictions should be used after the switching point.

In some embodiments, computational efficiency can be improved by training the first model and the one or more second models and/or generating predictions using such models in process 300 based on the predicted switching point from step 608. Because, in some embodiments, predictions of the one or more second models will be used up to the switching point (with the first model being used after the switching point), in some embodiments the one or more second models are trained to provide predictions up to the switching point and/or used to predict values up to the switching point, omitting training and/or predicting for values after the switching point. Such models can be trained on less training data, use less memory and computing resources, and can improve accuracy as compared to one or more second models trained and used to make predictions over longer time horizons (e.g., over a full future time period including time steps after the predicted switching point). Similarly, in some embodiments, the first model is trained and/or used to make predictions for time steps after the switching point, saving on computational and memory resources that may otherwise be used to train and/or use the first model to predict values for time steps before the switching point. Various computational efficiencies can thereby be provided by the switching point prediction capabilities of process 600.

Referring now to FIG. 8, a flowchart of a process 800 for balancing forecast performance objectives is shown, according to some embodiments. Process 800 can be executed by the provider computing system 102, in some embodiments. In some embodiments, process 800 can be used to tune a number of different search results handled by process 200 and/or process 300 to balance forecast performance objectives including prediction accuracy (or error) and computational resource usage (e.g., runtime, CPU demand, memory usage, etc.). In some embodiments, process 800 is executed for different individual search requests and/or groups of search requests in order to dynamically tune the processes herein to best balance improvements in prediction accuracy (which can increase with the number of results modeled) with corresponding computing resource usage (which will increase with the number of results modeled) (e.g., by selecting different numbers for different search requests or models).

At step 802, a first relationship is determined between a number of the plurality of results for which forecasts are generated and a computing resource usage of the forecast generation. Step 802 can assess computing resource usage of step 308 of process 300, for example by executing step 308 while metering computing resource usage of process 300. Step 802 may also assess computing resource usage of step 304, which may also vary by number results for which modeling is performed. In some embodiments, steps 304 and 308 are performed multiple times for different numbers of results of the search query (e.g., predicting values of a second variable for one result of a search query, predicting values of the second variable for two results of the search query, predicting values of the second variable for three results of the search query, etc.) in order to generate a set of data pairs associating number of results and computing resource usage. Such an approach can be repeated for different search queries, in some embodiments. Step 802 can include fitting a function (e.g., linear fit, quadratic fit, exponential fit, regression model, etc.) to the resulting set of data pairs to determine the first relationship between first relationship is determined between a number results for which forecasts are generated and a computing resource usage of the forecast generation. The first relationship can be represented by a function *C*(*n*), where *n* is the number of results for which forecasts are generated.

At step 804, a second relationship is determined between the number of the plurality of results for which forecasts are generated and accuracy (or error) of the second future timeseries (i.e., timeseries of future values of the first variable as generated in step 310) generated based on the forecasts. Step 804 can include executing step 310 multiple times using forecasts for different numbers of results and assessing the accuracy (e.g., MAPE, RSME) of such forecasts by comparing the forecasts with actual values which occur at the corresponding times. A set of data pairs associating number of results with forecast accuracy can thus be generated in step 804. Step 804 can include fitting a function (e.g., linear fit, quadratic fit, exponential fit, regression model, etc.) to the resulting set of data pairs to determine the second function between the number of the plurality of results for which forecasts are generated and accuracy of the second future timeseries. The second relationship can be represented by a function *V*(*n*)*.*

At step 806, the number of the plurality of results used in process 300 is adjusted based on a comparison of the first relationship and the second relationship. In some embodiments, step 806 includes selecting a value of *n* which optimizes (e.g., maximizes) *J* = *V*(*n*) - *αC*(*n*)*,* where *α* is a scaling or weighting factor used to normalize or otherwise rescale *C*(*n*) relative to *V*(*n*) to enable comparison (e.g., according to user preferences for accuracy/value as compared to computing resource usage). By selecting a value of *n* that maximizes such objective function at step 806, the number of results for which step 304, step 308, and/or step 310 are/is performed can be optimally selected. Adjusting execution of process 300 in accordance with such a selection, at step 806, enables process 300 to be executed in a manner that balance consideration of both computational efficiency and forecast accuracy. Execution of process 800 thereby enhances the technical advantages of various other teachings herein.

Various implementations of the teachings above are within the present disclosure. In some embodiments, a method including receiving a search query from a user and providing a set of travel options satisfying the search query, where each travel option is associated with a travel characteristic. The method also includes predicting, with one or more option-level models, future values of the travel characteristics for the travel options. The method also includes predicting, with a set-level model, future values of an additional travel characteristic associated with the set of travel options, where the additional travel characteristic is a function of (e.g., minimum of) the travel characteristics for the travel options. The method also includes generating a composite timeseries forecast for the additional travel characteristic based on the predicted future values of the travel characteristics for the travel options and the predicted future values of the additional travel characteristic.

In some embodiments, generating the composite timeseries forecast includes using values based on the predicted future values of the travel characteristics for the travel options up to a switching point and using the predicted future values of the additional travel characteristic after the switching point (or using values based on the predicted future values of the travel characteristics for the travel options after a switching point and using the predicted future values of the additional travel characteristic up to the switching point in other embodiments). In some embodiments, the method includes determining the switching point as an output of a machine learning model (switching point model) trained to output the switching point and use the search query as an input. In some embodiments, the travel characteristics of the travel options are prices of the travel options and the additional travel characteristic of the set of travel options is a minimum price of the prices of the travel options.

In some embodiments, the travel characteristics of the travel options are demand for (or availability of) the travel options (e.g., a number of people expected to book the travel option; a number of people considering booking the travel option; an expected remaining number of seats, rooms, tickets, appointments, etc.; a risk of a travel option becoming no longer available; etc.). In such embodiments, modeling can be performed at different levels of granularity, for example forecasting demand for hotels in a particular city by modeling the at the city level, neighborhood level, and/or for individual properties and combining results of such modeling.

In some embodiments, the travel characteristics are cancellation risks and/or delay amounts, for example the likelihood that a flight (or event, concert, accommodation, rental, appointment, etc.) will be cancelled and/or a predicted amount of delay of the flight (or event, etc.). Models of multiple granularities according to the teachings herein can be used to predict cancellation risk and/or delay amount for individual search results and, separately, for overall set of search results, with predictions of such models combined or selected between for presentation to users, for example according to artificial intelligence processes as descried herein.

The teachings herein can also be adapted for predicting whether a user will execute a particular action (e.g., select a result, book a travel option, travel using a travel option). Various prediction and classification problems can be set up at multiple levels of granularity (i.e., set-level-models and subset-level-models according to the teachings here) and used for such predictions. For example, to improve efficiency of a travel booking application, multiple models can be used to classify whether a user is more likely to book a flight next as compared to booking a hotel (or other category) next and then cause the application to navigate directly to an interface for the most likely category the user is likely to be interested in next. In some such embodiments, models at different granularities (e.g., all flights, domestic flights, international flights; or all accommodations, hotels, vacation rentals) can be modelled separately and aggregated according ot the teachings herein to provide predictions of improved reliability, for example over time horizons.

The hardware and data processing components used to implement the various processes, operations, illustrative logics, logical blocks, modules and circuits described in connection with the embodiments disclosed herein may be implemented or performed with a general purpose single- or multi-chip processor, a digital signal processor (DSP), an application specific integrated circuit (ASIC), a field programmable gate array (FPGA), or other programmable logic device, discrete gate or transistor logic, discrete hardware components, or any combination thereof designed to perform the functions described herein. A general purpose processor may be a microprocessor, or, any conventional processor, controller, microcontroller, or state machine. A processor also may be implemented as a combination of computing devices, such as a combination of a DSP and a microprocessor, a plurality of microprocessors, one or more microprocessors in conjunction with a DSP core, or any other such configuration. In some embodiments, particular processes and methods may be performed by circuitry that is specific to a given function. The memory (e.g., memory, memory unit, storage device) may include one or more devices (e.g., RAM, ROM, Flash memory, hard disk storage) for storing data and/or computer code for completing or facilitating the various processes, layers and modules described in the present disclosure. The memory may be or include volatile memory or non-volatile memory, and may include database components, object code components, script components, or any other type of information structure for supporting the various activities and information structures described in the present disclosure. According to an exemplary embodiment, the memory is communicably connected to the processor via a processing circuit and includes computer code for executing (e.g., by the processing circuit or the processor) the one or more processes described herein.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. The terms "first" and "second" are used herein to as labels to differentiate variables, models, etc. and should not be interpreted as requiring a particular priority or order of models, variables, steps of training or using the models, etc. All such variations are within the scope of the disclosure. Likewise, software implementations of the described methods could be accomplished with standard programming techniques with rule-based logic and other logic to accomplish the various connection steps, processing steps, comparison steps, and decision steps.

## Claims

1. A computer-implemented method comprising:
predicting a first future timeseries for a first variable using a first model;
predicting future values for a plurality of second variables using one or more second models, wherein the first variable is a function of the plurality of second variables;
generating a second future timeseries for the first variable as based on the future values for the plurality of second variables; and
providing a composite timeseries forecast for the first variable by combining the first future timeseries and the second future timeseries.

2. The method of Claim 1, wherein the second variables are associated with a plurality of results satisfying a search query and the first variable is associated with an overall set of the plurality of results.

3. The method of Claim 2, further comprising generating synthetic training data by automatically executing searches a plurality of times over a time period, wherein the first model and the one or more second models are trained using the synthetic training data.

4. The method of any preceding claim, wherein combining the first future timeseries and the second future timeseries comprises using the second future timeseries before a switching point and the first future timeseries after the switching point.

5. The method of Claim 4, wherein:
the second variables are associated with a plurality of results satisfying a search query and the first variable is associated with an overall set of the plurality of results; and
the method further comprises determining the switching point by predicting, using a switching point model, a time at which the first future timeseries is expected to become more accurate than the second future timeseries.

6. The method of Claim 5, comprising:
generating training data comprising a plurality of prior search queries and a plurality of prior switching points associated with the plurality of prior search queries, wherein generating the training data comprises determining the plurality of prior switching points by comparing prediction error of a plurality of additional models associated with the plurality of prior search queries; and
training the switching point model using the training data.

7. The method of any preceding claim, further comprising selecting a number of the plurality of second variables by comparing a first relationship between the number of the plurality of second variables and computing resource usage of predicting the future values of the plurality of second variables with a second relationship between the number of the plurality of second variables and prediction error of the one or more second models.

8. A computer-implemented method for forecasting timeseries data associated with results of a search query, comprising:
inputting the search query to a neural network trained to output, based on the search query, a time step in a prediction horizon at which a first accuracy of a first predictive model is predicted to exceed a second accuracy of a second predictive model; and
forecasting the timeseries data by using second predictions of the second predictive model up to the time step and first predictions of the first predictive model beyond the time step.

9. The method of Claim 8, wherein a plurality of results satisfy the search query, and the method further comprises:
predicting, as an output of the second predictive model, values associated with one or more particular results of the plurality of results and determining the second predictions as a function of the values; and
predicting, as an output of the first predictive model, the first predictions as values associated with an overall set of the plurality of results.

10. The method of Claim 9, further comprising selecting a number of the one or more particular results by comparing a first relationship between the number the one or more particular results and computing resource usage of predicting the values associated with the one or more particular results with a second relationship between the number of the one or more particular results and prediction error of the second predictive model.

11. The method of Claim 8, 9 or 10, comprising generating synthetic training data by automatically executing searches a plurality of times of a time period, wherein the first predictive model and the second predictive model are trained using the synthetic training data.

12. The method of Claim 10 or any claim dependent thereon, wherein the synthetic training data comprises a plurality of prior search queries and a plurality of prior switching points associated with the plurality of prior search queries, wherein generating the training data comprises determining the plurality of prior switching points by comparing prediction error of a plurality of additional models associated with the plurality of prior search queries; and
training the neural network using the training data.

13. The method of any one of Claims 8-12, wherein the search query relates to a travel search and the timeseries data relates to a travel characteristic.

14. One or more non-transitory, computer-readable media storing program instructions that, when executed by one or more processors, cause the one or more processors to perform the method of any preceding claim.

15. A system comprising:
one or more processors; and
a memory storing computer readable instructions configured to cause the one or more processors to perform the method of any one of claims 1 to 13.
